# EUROPEAN PATENT APPLICATION

(11) **EP 4 588 749 A1**
(43) Date of publication of application: **23.07.2025**
(21) Application number: 23932728.1
(22) Date of filing: 10.10.2023
(51) Int. Cl.: B61F 5/24

(54) **TRANSVERSE VIBRATION DAMPING APPARATUS, BOGIE, AND TRAMCAR**

(30) Priority: 12.04.2023 CN 202310384896
(71) Applicant: CRRC TANGSHAN CO., LTD., Fengrun District Tangshan Hebei 063035 (CN)
(72) Inventor: PI, Guorui, Tangshan, Hebei 063035 (CN); LI, Liangjie, Tangshan, Hebei 063035 (CN); CUI, Lei, Tangshan, Hebei 063035 (CN); ZHANG, Xiaohong, Tangshan, Hebei 063035 (CN); YIN, Wenlong, Tangshan, Hebei 063035 (CN)
(74) Representative: Michalski Hüttermann & Partner Patentanwälte mbB
(86) International application number: PCT/CN2023/123792
(87) International publication number: WO 2024/212456

(57) **Abstract**

The embodiments of the present application provide a transverse vibration damping apparatus, a bogie, and a tramcar. The transverse vibration damping apparatus comprises: a transverse rod, provided with first and second transverse rod ends distributed in the transverse direction of a tramcar body, the first transverse rod end being used for connecting to the tramcar body; a support structure, the bottom of the support structure being used for hinging to a bogie framework, and the top of the support structure having two ends distributed along the transverse direction of the tramcar body, one end of the support structure being hinged to the second transverse rod end of the transverse rod; and a pressure reduction structure, one end of which is used for connecting to an upper cover plate of the bogie framework, and the other end of which is hinged to the other end of the top of the support structure. The transverse rod is used for transmitting to the pressure reduction structure via the support structure a transverse acting force generated when the tramcar body moves transversely relative to the bogie, and the pressure reduction structure reduces transverse vibrations during the operation of the tramcar, thereby increasing comfort during tramcar operation, while simultaneously avoiding the problem of operational safety being endangered by key components of the train breaking, derailment, etc.

## Description

### TECHNICAL FIELD

The present disclosure relates to the technical field of trams, more particularly relates to a transverse vibration damping device, a bogie, and a tram.

### BACKGROUND

The transverse vibration damper can attenuate the transverse vibration caused by the transverse force generated by wheel-rail contact and crosswind, prolong the structural strength and the service life of the components, improve the riding comfort of passengers, and avoid problems that endanger driving safety such as fracture and derailment of key components of the train. The transverse vibration damper for the bogie of the railway vehicle is generally a double-cylinder structure and comprises a working cylinder, a piston rod, a dust cover, a guider, an oil-storage tank, a vibration damper oil, etc. The piston in the vibration damper moves up and down and the oil in the working cylinder flows from one chamber to the other through the hole. At this time, the friction between the valve system and the oil and the internal friction between the oil molecules generate damping forces on the vibration, to smooth the vibration of the car.

The wheel diameter of the bogie of the high-speed EMUs or urban railway passenger cars is generally larger than 840mm, and the wheelbase of the bogie is not less than 2200mm, so the bogie has a certain structural space. However, the modern tram has a 100% or 70% low-floor structure, and the height between the low-floor area and the railway surface is only 350mm, so the height of the bogie components from the railway surface is lower. Moreover, it requires meeting the limitation on the lower portion of the car, so the conventional transverse vibration damper structure has no space for mounting.

### SUMMARY

In order to solve one of the above-described technical defects, the embodiment of the present disclosure provides a transverse vibration damping device, a bogie, and a tram.

According to a first aspect of the embodiment of the present disclosure, a transverse vibration damping device is provided, is disposed on a bogie of a car body, for transmitting the transverse displacement between the car body and the bogie, and comprises:
a transverse rod, provided with a transverse rod end portion I and a transverse rod end portion II arranged transversely along the car body, where the transverse rod end portion I is connected to the car body;
a supporting structure, where a bottom portion of the supporting structure is hinged with a frame of the bogie, a top portion of the supporting structure has two ends arranged transversely along the car body, and one end is hinged with the transverse rod end portion II of the transverse rod; and
a decompression structure, where one end of the decompression structure is connected to a frame upper cover plate of the bogie, and the other end of the decompression structure is hinged with the other end of the top portion of the supporting structure;
where the transverse rod transmits a transverse force generated when the car body moves transversely relative to the bogie to the decompression structure through the supporting structure.

According to a second aspect of the embodiment of the present disclosure, a bogie is provided and comprises a frame upper cover plate and a transverse vibration damping device as described above, where the transverse vibration damping device is mounted on the frame upper cover plate of the bogie.

According to a third aspect of an embodiment of the present disclosure, a tram is provided and comprises a bogie as described above, where the transverse rod of the transverse vibration damping device is hinged with a car body of the tram through the transverse rod end portion I.

The transverse vibration damping device, the bogie, and the tram provided by the embodiment of the present disclosure have the following advantages:
Under the condition that there is no mounting space for the conventional transverse vibration damper in the bogie of the low-floor tram, the transverse vibration between the bogie and the car body is transmitted by the transverse rod, the supporting structure transmits the transverse vibration transmitted by the transverse rod to the decompression structure, and the decompression structure absorbs and attenuates the transverse vibration of the car during the running process, so as to improve the running comfort of the car, and avoid the problems that endanger the driving safety of the car, such as fracture and derailment of key components of the train.

### BRIEF DESCRIPTION OF THE DRAWINGS

The accompanying drawings described herein are intended to provide a further understanding of the present disclosure and constitute a portion of the present disclosure, and the schematic embodiments of the present disclosure and the description thereof are intended to explain the present disclosure and do not constitute an undue limitation of the present disclosure. In the drawings:
Fig. 1 is a schematic diagram of the overall structure of a transverse vibration damping device provided by the embodiment of the present disclosure.
Fig. 2 is a schematic diagram of the overall structure of a transverse rod of the transverse vibration damping device provided by the embodiment of the present disclosure.
Fig. 3 is a schematic diagram of the overall structure of a supporting structure of the transverse vibration damping device provided by the embodiment of the present disclosure.
Fig. 4 is a schematic diagram of the overall structure of a decompression structure of the transverse vibration damping device provided by the embodiment of the present disclosure.
Fig. 5 is a schematic diagram of the overall structure of a frame of a bogie provided by the embodiment of the present disclosure.
Fig. 6 is a schematic diagram of the overall structure of the bogie provided by the embodiment of the present disclosure.

REFERENCES IN THE DRAWINGS: transverse rod 1, transverse rod end portion I 101, transverse rod end portion II 102, positioning supporting seat 2, positioning supporting seat end portion I 201, positioning supporting seat end portion II 202, positioning supporting seat end portion III 203, hydraulic vibration damper 3, dust cover end 301, oil-storage tank end 302, frame upper cover plate 4, car body connecting seat 5, and frame fixing seat 6.

### DETAILED DESCRIPTION OF THE EMBODIMENTS

In order to make the technical solutions and advantages in the embodiments of the present disclosure more clear, the exemplary embodiments of the present disclosure will be described in further detail below with reference to the accompanying drawings, and it is obvious that the described embodiments are only a part of the embodiments of the present disclosure, and are not exhaustive of all the embodiments. It should be noted that the embodiments and features in the embodiments in the present disclosure may be combined with each other as long as there is no conflict.

In the process of implementing the present disclosure, the inventor found that in the related art, modern trams have a 100% or 70% low-floor structure, and the height between the low-floor area and the railway surface is only 350 mm, so the mounting space of the bogie system is relatively limited. Under the condition of ensuring vehicle passability and floor height in the middle area of the bogie, there is usually no space for mounting the transverse vibration damper.

In view of the above problems, the embodiment of the present disclosure provides a transverse vibration damping device, a bogie, and a tram.

According to a first aspect of the embodiment of the present disclosure, a transverse vibration damping device is provided.

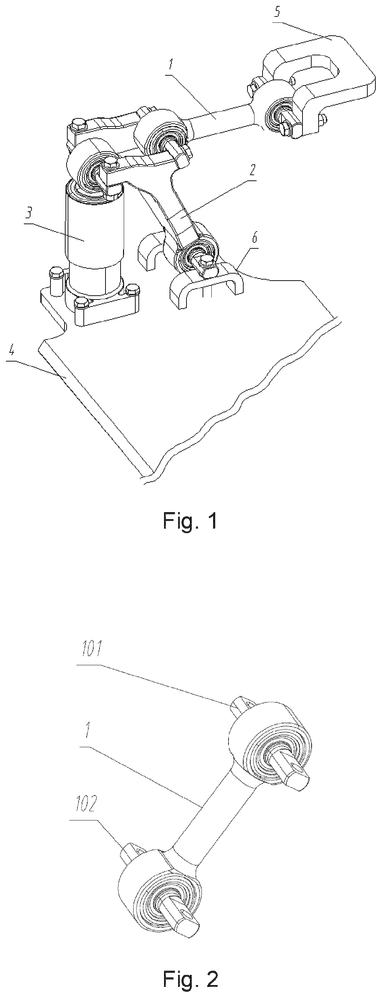

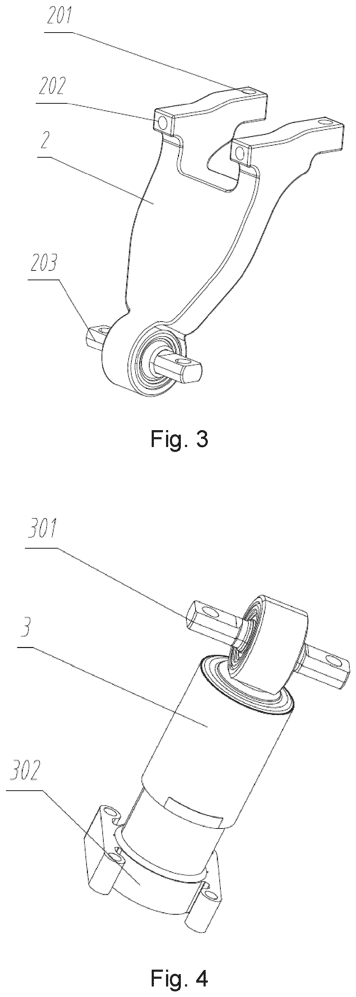

As shown in Figs. 1 to 4, the embodiment of the present disclosure provides a transverse vibration damping device disposed on the bogie of the car body, for transmitting the transverse displacement between the car body and the bogie, and the transverse vibration damping device comprises:
a transverse rod 1, provided with a transverse rod end portion I 101 and a transverse rod end portion II 102 arranged transversely along the car body, where the transverse rod end portion I 101 is used for connecting the car body;
a supporting structure, where a bottom portion of the supporting structure is hinged with a frame of the bogie, a top portion of the supporting structure has two ends arranged transversely along the car body, and one end is hinged with the transverse rod end portion II 102 of the transverse rod 1; and
a decompression structure, where one end of the decompression structure is connected to a frame upper cover plate 4 of the bogie, and the other end of the decompression structure is hinged with the other end of the top portion of the supporting structure;
where the transverse rod 1 transmits a transverse force generated when the car body moves transversely relative to the bogie to the decompression structure through the supporting structure.

In the specific implementation process, the transverse rod 1 is provided with a transverse rod end portion I 101 and a transverse rod end portion II 102 arranged transversely along the car body, the transverse rod end portion I 101 is fixedly connected to a car body connecting seat 5, and the car body connecting seat 5 is fixed on an underframe of the car body by welding. The bottom portion of the supporting structure is mounted on the frame fixing seat 6 of the bogie by hinging, and one end of the top portion of the supporting structure is hinged with the transverse rod end portion II 102 of the transverse rod 1. One end of the decompression structure is connected to the frame upper cover plate 4, and the other end of the decompression structure is hinged with the other end of the top portion of the supporting structure. During the running process of the train, the transverse rod 1 transmits the transverse vibration between the bogie and the car body to the supporting structure, and the transverse vibration acts on the decompression structure, which is used to attenuate the transverse vibration of the car during running process.

In the embodiment of the present disclosure, the supporting structure is a positioning supporting seat 2, the top portion of the positioning supporting seat 2 is provided with a positioning supporting seat end portion I 201 and a positioning supporting seat end portion II 202 transversely arranged along the car body, and the bottom portion of the positioning supporting seat 2 is provided with a positioning supporting seat end portion III 203. The positioning supporting seat end portion I 201 is hinged with the other end of the decompression structure. The positioning supporting seat end portion II 202 is connected to the transverse rod end portion II 102. The positioning supporting seat 203 is connected to the frame upper cover plate 4.

In the specific implementation process, the supporting structure is a positioning supporting seat 2, the top portion of the positioning supporting seat 2 is provided with a positioning supporting seat end portion I 201, the other end opposite to one end of the positioning supporting seat end portion I 201 is provided with a positioning supporting seat end portion II 202, the positioning supporting seat end portion 202 is connected to the transverse rod end portion II 102, the bottom portion of the positioning supporting seat 2 is provided with a positioning supporting seat end portion III 203, and the positioning supporting seat 203 is connected to the frame upper cover plate 4. While the transverse vibration between the car body and the bogie is transmitted on the transverse rod 1, the supporting seat end portion III 203 secures the positioning supporting seat 2 on the frame fixing seat 6, respectively connects and fastens the transverse rod 1 and the decompression structure. Moreover, when the transverse position between the bogie and the car body changes, the position of the transverse rod 1 changes accordingly, and the positioning supporting seat 2 takes the supporting seat end portion III 203 as the rotation center.

In the embodiment of the present disclosure, the decompression structure comprises a hydraulic vibration damper 3, a dust cover end 301 of the hydraulic vibration damper 3 is hinged with the positioning supporting seat end portion I 201 by a rubber joint, and an oil-storage tank end 302 of the hydraulic vibration damper 3 is used for connecting the frame upper cover plate 4.

In the specific implementation process, the decompression structure comprises a hydraulic vibration damper 3, and the hydraulic vibration damper 3 adopts a double-cylinder hydraulic vibration damper conventional in modern railway vehicle design. The hydraulic vibration damper 3 is vertically arranged on the bogie, the dust cover end 301 of the hydraulic vibration damper 3 is hinged with the positioning supporting seat end portion I 201 by a rubber joint, and the oil-storage tank end 302 of the hydraulic vibration damper 3 is fixedly mounted on the frame upper cover plate 4 of the bogie through four bolts, the positioning supporting seat 2 rotates with the supporting seat end portion III 203 as the rotation center and drives the dust cover 301 end of the hydraulic vibration damper 3 to generate upward or downward displacement, the damping force is generated by the pressure difference of the piston valve inside the hydraulic vibration damper 3, and the vibration energy is partly absorbed and converted into heat energy dissipated into the atmosphere. That is, the hydraulic vibration damper 3 as a decompression structure is vertically arranged on the frame upper cover plate 4 to convert the transverse relative displacement or transverse force between the car body and the bogie into the vertical deformation of the decompression structure, thereby obtaining buffering.

In addition, the transversely arranged transverse rod 1 and the vertically arranged decompression structure are directly connected through the supporting structure (the positioning supporting seat 2), and the bottom portion of the supporting structure is hinged with the bogie. If the transverse rod 1, the supporting structure, and the decompression structure are all rigid connected, the rigid force is transmitted between each other, and the effect of buffering the transverse displacement and force of the car body through the decompression structure cannot be optimized. Therefore, in the embodiment of the present disclosure, the joint at the connection is designed as an elastic rubber joint, so that the transverse displacement or force is converted into the deformation trend of the decompression structure through the elasticity of the rubber joint, and the decompression structure has a better buffering effect.

Specifically, in the embodiment of the present disclosure, the transverse rod end portion I 101 is hinged with the car body by using a rubber joint, and the transverse rod end portion II 102 is hinged with one end of the top portion of the supporting structure by a rubber joint. The positioning supporting seat end portion III 303 is further hinged with the frame upper cover plate 4 by a rubber joint.

In the specific implementation process, the transverse rod 1 is forged by alloy structural steel 42CrMo, the positioning supporting seat 2 is forged by alloy structural steel 45 steel, and the main body of the structure is a swallow-tail structure. The transverse rod end portion I 101 is hinged with the car body by a rubber joint, and the transverse rod end II 102 is hinged with one end of the top portion of the supporting structure by a rubber joint. The positioning supporting seat end portion III 203 is further hinged with the frame upper cover plate 4 by a rubber joint. The transverse rod end portion I 101 is fixed on the positioning supporting seat 2 by fasteners, and the transverse rod end portion II 102 is connected to the car body by fasteners. The rubber joints in the transverse rod end portion I 101 and the transverse rod end portion II 102 can meet the deformation requirement for conversion of transverse displacement and vertical displacement.

According to a second aspect of the embodiment of the present disclosure, a bogie is provided and comprises a frame upper cover plate 4 and the transverse vibration damping device as described above, where the transverse vibration damping device is mounted on the frame upper cover plate 4 of the bogie.

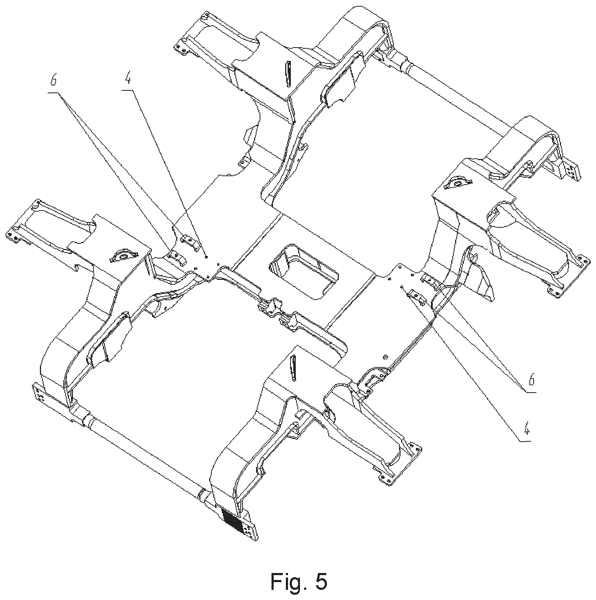

In the specific implementation process, as shown in Fig. 5, two transverse vibration damping devices are provided on the bogie, and are arranged at intervals along the transverse direction of the car body. The frame upper cover plate 4 is provided with a frame fixing seat 6. The two frame fixing seats 6 are U-shaped fixing seats. The transverse vibration damping device comprises a positioning supporting seat 2 and a decompression structure, and the bottom portion of the positioning supporting seat 2 is hinged to the frame fixing seat 6. The bottom portion of the decompression structure is vertically fixed on the frame upper cover plate 4 by bolts. During the running process of the train, the displacement between the bogie and the car body is transmitted through the transverse vibration damping devices on two sides of the bogie. When the transverse position between the bogie and the car body changes relatively, the position of the transverse rod 1 in the transverse vibration damping device also changes accordingly. The positioning supporting seat 2 takes the positioning supporting seat end portion III 203 as the rotation center and drives the dust cover end 301 of the hydraulic vibration damper 3 to generate upward or downward displacement (or moving trend), and the damping force is generated through the pressure difference of the piston valve inside the hydraulic vibration damper 3, and the vibration energy is partly absorbed and converted into heat energy dissipated into the atmosphere. One end of the dust cover end 301 of the hydraulic vibration damper 3 is mounted in a manner of the rubber joint, to adapt to the relative displacement between the bogie and the car body, and the hydraulic vibration damper 3 maintains the vertical damping change.

According to a third aspect of embodiments of the present disclosure, a tram is provided and comprises the bogie as described above.

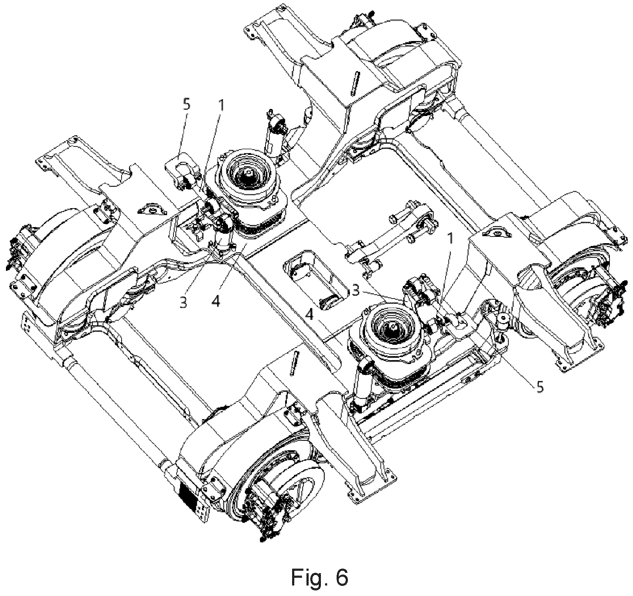

In the specific implementation process, as shown in Fig. 6, the transverse rod 1 of the transverse vibration damping device is hinged with the car body of the tram through the transverse rod end portion I 101, a car body connecting seat 5 is fixedly provided on the underframe of the tram, and the transverse rod end portion I 101 is hinged with the car body connecting seat 5.

Although preferred embodiments of the present disclosure have been described, additional changes and modifications may be made to these embodiments once the underlying inventive concepts have become aware of those skilled in the art. Accordingly, the appended claims are intended to be construed as comprising the preferred embodiments and all changes and modifications falling within the scope of the present disclosure.

It will be apparent that those skilled in the art can make various changes and modifications to the present disclosure without departing from the spirit and scope of the present disclosure. Thus, the present disclosure is intended to comprise such modifications and variations to the extent that they fall within the scope of the claims of the present disclosure and their equivalents.

## Claims

1. A transverse vibration damping device, disposed between a car body and a bogie, **characterized in that**, comprising:
a transverse rod (1), provided with a transverse rod end portion I (101) and a transverse rod end portion II (102) arranged transversely along the car body, wherein the transverse rod end portion one (101) is connected to the car body;
a supporting structure, wherein a bottom portion of the supporting structure is hinged with a frame of the bogie, a top portion of the supporting structure has two ends arranged transversely along the car body, and one end is hinged with the transverse rod end portion II (102) of the transverse rod (1); and
a decompression structure, wherein one end of the decompression structure is connected to the frame upper cover plate (4) of the bogie, and the other end of the decompression structure is hinged with the other end of the top portion of the supporting structure;
wherein the transverse rod (1) transmits a transverse force generated when the car body moves transversely relative to the bogie to the decompression structure through the supporting structure.

2. The transverse vibration damping device according to claim 1, wherein the supporting structure is a positioning supporting seat (2), the top portion of the positioning supporting seat (2) is provided with a positioning supporting seat end portion I (201) and a positioning supporting seat end portion II (202) arranged transversely along the car body, and the bottom portion of the positioning supporting seat (2) is provided with a positioning supporting seat end portion III (203);
wherein the positioning supporting seat end portion I (201) of the positioning supporting seat is hinged with the other end of the decompression structure, the positioning supporting seat end portion II (202) is hinged with the transverse rod end portion II (102), and the positioning supporting seat (203) is connected to the frame upper cover plate (4) of the bogie.

3. The transverse vibration damping device according to claim 2, wherein the decompression structure comprises a hydraulic vibration damper (3), a dust cover end (301) of the hydraulic vibration damper (3) is hinged with the positioning supporting seat end I (201) by a rubber joint, and an oil-storage tank end (302) of the hydraulic vibration damper (3) is connected to the frame upper cover plate (4).

4. The transverse vibration damping device according to claim 1, wherein the transverse rod end portion I (101) is hinged with the car body by a rubber joint, and the transverse rod end portion II (102) is hinged with one end of the top portion of the supporting structure by a rubber joint.

5. The transverse vibration damping device according to claim 2, wherein the positioning supporting seat end portion III (203) is further hinged with the frame upper cover plate (4) the bogie by a rubber joint.

6. A bogie comprising a frame upper cover plate (4), **characterized in that**, comprising the transverse vibration damping device according to any one of claims 1 to 5, wherein the transverse vibration damping device is mounted on the frame upper cover plate (4) of the bogie.

7. The bogie according to claim 6, wherein two transverse vibration damping devices are provided and are arranged at intervals along the transverse direction of the car body.

8. The bogie according to claim 6, wherein a frame fixing seat (6) is provided on the frame upper cover plate (4), the transverse vibration damping device comprises a positioning supporting seat (2) and a decompression structure, and the bottom portion of the positioning supporting seat (2) is hinged with the frame fixing seat (6);
wherein the bottom portion of the decompression structure is fixed on the frame upper cover plate (4) by bolts.

9. A tram, **characterized in that**, comprising the bogie according to any one of claims 6 to 8, wherein the transverse rod (1) of the transverse vibration damping device is hinged with the car body of the tram by the transverse rod end portion I (101).

10. The tram according to claim 9, wherein a car body connecting seat (5) is fixedly provided on an underframe of the tram, and the transverse rod end portion I (101) is hinged with the car body connecting seat (5).
